# EUROPEAN PATENT APPLICATION

(11) **EP 4 528 629 A1**
(43) Date of publication of application: **26.03.2025**
(21) Application number: 23807788.7
(22) Date of filing: 09.04.2023
(51) Int. Cl.: G06Q 50/30, G06Q 50/00, G06Q 50/10, H04W 4/021

(54) **PHOTO SHARING SYSTEM THAT USES SIGNAGE HAVING REFERENCE AREA**

(30) Priority: 17.05.2022 KR 20220060394
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2023/004770
(87) International publication number: WO 2023/224265

(57) **Abstract**

Proposed is a photo sharing system that uses a signage device having a reference area proposed in the present disclosure, the reference area of the signage device is used to output photo content of users within the reference area to the signage device, thereby sharing the photo content with people near the signage device to expand online social media functions to offline, and enabling the people near the signage device to have enjoyment while viewing the photo content together, and encouraging offline communication.

## Description

### Technical Field

The present disclosure relates to a photo sharing system. More particularly, the present disclosure relates to a photo sharing system that uses a signage device having a reference area.

### Background Art

A signage device is a communication tool that can induce marketing and advertising effects, and customer experiences for businesses. The signage device is an image display device that is installed in public spaces or commercial spaces to provide various information and advertisements in real time. In particular, a digital signage device uses digital technology to display an image and information on a display screen and provides a comprehensive management platform that can be remotely controlled over a network.

The signage device is primarily installed outdoors, in subway stations, and public places, but recently, the installation locations have become more diverse, including restaurants, cafes, and apartment elevators. However, the purpose of the signage device has not significantly expanded beyond its role as an advertising board.

In the meantime, social media for communicating with others on the web has become increasingly important. However, social media is limited to online communication, so people neglect offline communication, have difficulty in offline conversation, or only look at their mobile phones even in offline meetings. In many online human relationships, individuals are rather alienated.

Therefore, there is a need for the development of technology expand online communication to offline by making organic online-offline connection, and encourage offline communication.

In the meantime, as a related art of the present disclosure, disclosed is Korean Patent No. 10-2386273 (title of invention: SIGNAGE SYSTEM THAT WORKS IN CONJUNCTION WITH USER TERMINALS, registration date: 8 April 2022).

### Disclosure

### Technical Problem

The present disclosure has been made keeping in mind the above problems occurring in the previously proposed methods, and the present disclosure is directed to providing a photo sharing system that uses a signage device having a reference area, wherein the reference area of the signage device is used to output photo content of users within the reference area to the signage device, thereby sharing the photo content with people near the signage device to expand online social media functions to offline, and enabling the people near the signage device to have enjoyment while viewing the photo content together, and encouraging offline communication.

### Technical Solution

In order to achieve the above objective, according to one aspect of the present disclosure, there is provided a photo sharing system that uses a signage device having a reference area,
the photo sharing system including:
the signage device configured to output photo content through a display panel thereof;
user terminals configured to transmit the photo content within the reference area of the signage device; and
a service server configured to remotely manage the signage device so that the photo content received from the user terminals is output from the signage device,
wherein the service server includes:
   a database part configured to store the reference area of the signage device;
   a location determination part configured to use location information of the user terminals to determine whether locations of the user terminals are included in the reference area of the signage device; and
   a signage device management part configured to control transmission so that the photo content received from the user terminals is output from the signage device,
   wherein photo content of users within the reference area is output from the signage device for sharing.

Preferably, the reference area may be
relative to an installation location of the signage device, and may include a location at which the photo content output through the display panel of the signage device is viewed.

Preferably, the photo content
may be composed of a photo or video, and text of a predetermined length or less.

Preferably, the database part may be configured to
store, for each signage device, the photo content transmitted by the signage device management part.

Preferably, the signage device may be configured to
output the photo content in order of creation or in order of popularity.

Preferably, the signage device may be configured to
display, through the display panel, a QR code storing a link to access the service server for sharing the photo content through the signage device.

Preferably, the service server
may further include an editing part configured to provide an editing tool to the user terminals for creating the photo content.

Preferably, the service server
may further include a reference area setting part configured to set the reference area of the signage device by using the location information of the user terminals accessing the service server and installation location information of the signage device.

### Advantageous Effects

According to a photo sharing system that uses a signage device having a reference area proposed in the present disclosure, the reference area of the signage device is used to output photo content of users within the reference area to the signage device, thereby sharing the photo content with people near the signage device to expand online social media functions to offline, and enabling the people near the signage device to have enjoyment while viewing the photo content together, and encouraging offline communication.

### Description of Drawings

FIG. 1 is a diagram illustrating the overall configuration of a photo sharing system that uses a signage device having a reference area according to an embodiment of the present disclosure.
FIG. 2 is a diagram illustrating a photo sharing system that uses a signage device having a reference area according to an embodiment of the present disclosure.
FIG. 3 is a diagram illustrating a detailed configuration of a service server, in a photo sharing system that uses a signage device having a reference area according to an embodiment of the present disclosure.
FIGS. 4 and 5 are diagrams illustrating examples of a display screen of a signage device in which photo content is output, in a photo sharing system that uses a signage device having a reference area according to an embodiment of the present disclosure.

### <Description of the Reference Numerals in the Drawings>

- 10:: reference area
- 100:: signage device
- 200:: user terminal
- 300:: service server
- 310:: database part
- 320:: location determination part
- 330:: signage device management part
- 340:: editing part
- 350:: reference area setting part

### Best Mode

Hereinafter, preferred embodiments of the present disclosure will be described in detail with reference to the accompanying drawings such that the present disclosure can be easily embodied by those skilled in the art to which the present disclosure belongs. However, in describing the preferred embodiments of the present disclosure in detail, if it is decided that a detailed description of the known function or configuration related to the present disclosure makes the subject matter of the present disclosure unclear, the detailed description will be omitted. In addition, throughout the drawings, the same reference numerals are used for parts having similar functions and operations.

Throughout the specification, when a part is referred to as being "connected" to another part, it includes not only being "directly connected", but also being "indirectly connected" by interposing the other part therebetween. In addition, when a part "includes" an element, this means that it further includes other elements, but does not exclude other elements, unless specifically stated otherwise.

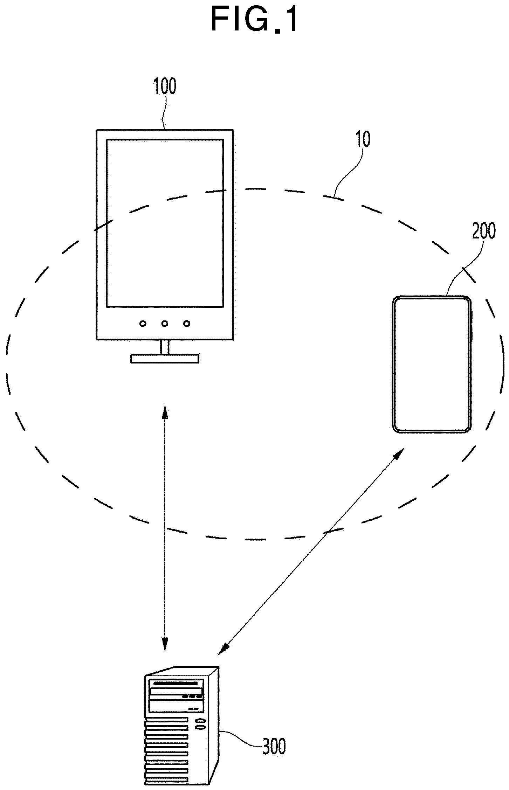

FIG. 1 is a diagram illustrating the overall configuration of a photo sharing system that uses a signage device 100 having a reference area 10 according to an embodiment of the present disclosure. As shown in FIG. 1, a photo sharing system that uses a signage device 100 having a reference area 10 according to an embodiment of the present disclosure may include a signage device 100, a user terminal 200, and a service server 300.

That is, according to the present disclosure, the service server 300 may receive photo content created by a user within the reference area 10 near the signage device 100, and may output the photo content through the signage device 100 so that multiple people near the signage device 100 can share the photo content. For example, the signage device 100 may be installed at a tourist spot or a store, and the reference area 10 may be set on the basis of the installation location of the signage device 100. That is, the signage device 100 may be installed at a location, such as a tourist spot or a store, in which people stay for a particular period of time, and people near the signage device 100 may create photo content by taking photos of the tourist spot or photos of the products for sale in the store, and may transmit the photos to the signage device 100 to share with other people in the tourist spot or the store. In this way, sharing photo content through the signage device 100 allows people to view photos taken in the same tourist spot by other people, and to have enjoyment in differences in viewpoints, and to discover photo spots or new menus that the people did not know, to communicate with other people nearby in real time, whereby online communication via social media is extended to offline communication to enrich offline communication.

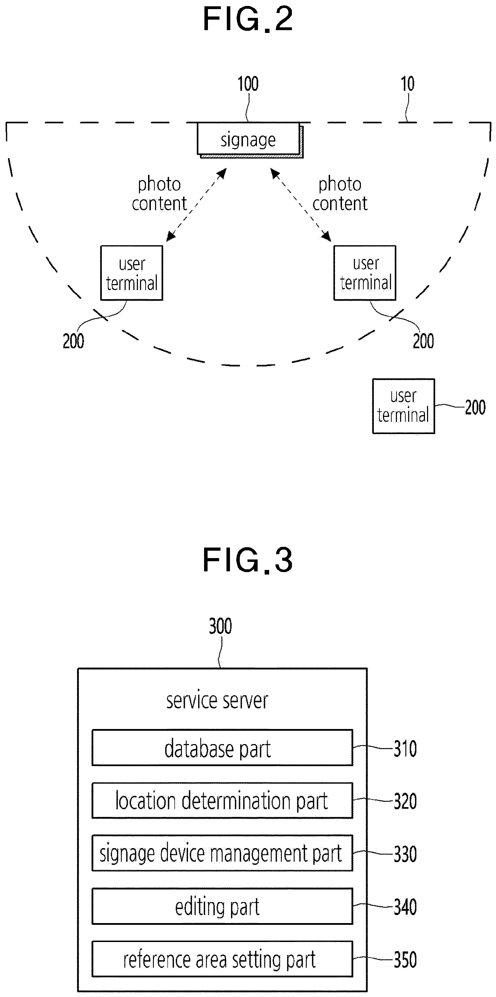

FIG. 2 is a diagram illustrating a photo sharing system that uses a signage device 100 having a reference area 10 according to an embodiment of the present disclosure. As shown in FIG. 2, in a photo sharing system that uses a signage device 100 having a reference area 10 according to an embodiment of the present disclosure, a region in which people are able to view a display panel of the signage device 100 may be set as the reference area 10 on the basis of the installation location of the signage device 100, and photo content may be received from user terminals 200 within the reference area 10 to share the photo content witin the reference area 10. The photo content is shared through the signage device 100 that is generally larger than a personal terminal, so a user may feel connected to the offline world when his or her photo content is output and may have enjoyment while viewing other users' photo content. In addition, users outside the reference area 10 may be encouraged to approach the signage device 100 to view photo content. In addition, as shown in FIG. 2, users outside the reference area 10 are unable to share photo content through the signage device 100, so the signage device 100 may promote the users to move into the reference area 10.

Hereinafter, each of the elements constituting a photo sharing system that uses a signage device 100 having a reference area 10 according to an embodiment of the present disclosure will be described in detail with reference to FIGS. 1 and 2.

The signage device 100 may output photo content through the display panel. In addition, as shown in FIGS. 1 and 2, the reference area 10 may be set for each signage device 100, and photo content received from the user terminals 200 within the reference area 10 may be output to the signage device 100 for sharing.

Herein, the reference area 10 may be relative to the installation location of the signage device 100, and may include a location at which photo content output through the display panel of the signage device 100 is viewed. For example, the reference area 10 may be in the circular or elliptical shape including the installation location of the signage device 100 as shown in FIG. 1, or may be in the fan shape in which the display panel of the signage device 100 is visible as shown in FIG. 2. The reference area is not limited in shape, such as polygonal and irregular shapes, or may be configured as two separate areas.

The user terminals 200 may transmit photo content within the reference area 10 of the signage device 100. The user terminals 200 may create photo content to be uploaded to the signage device 100 within the reference area 10 and transmit the photo content to the service server 300, thereby sharing the photo content through the signage device 100. The user terminals 200 may be realized as electronic devices that perform various functions related to taking photos, and creating and uploading photo content.

Herein, examples of the electronic device may include at least one of the following: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, and a wearable device. Examples of the wearable device may include at least one of the following: an accessory type (e.g., a watch, ring, bracelet, anklet, necklace, glasses, contact lens, or a head-mounted device (HMD)), a fabric or clothing-integrated type (e.g., electronic clothing), a body-attachable type (e.g., a skin pad or tattoo), and an implantable circuit. In various embodiments, the electronic device is not limited to the aforementioned devices, and may be a combination of two or more of the aforementioned various devices.

The user terminals 200 may access the service server 300 through a web application, a web browser, or an application to create and upload photo content. In addition, the user terminals 200 may execute an editing function for creating photo content, and the editing function may include photo editing, text editing, and video editing functions that the service server 300 provides or an application of the user terminals 200 provides.

Herein, the photo content may be composed of a photo or video, and text of a predetermined length or less. That is, since the photo content is output through the display panel of the signage device 100, a photo or video and a short text of three sentences or less are based so that the details of the photo content is intuitively understood with a brief glance at the display screen. In addition, the photo content may include a plurality of photos. For example, several photos taken at a particular restaurant may be composed into one piece of content. The several photos may include text for each photo.

The service server 300 may remotely control the signage device 100 such that the signage device 100 outputs the photo content received from the user terminals 200. That is, the service server 300 may manage the signage device 100 at a remote location. More specifically, the service server may manage the reference area 10 of the signage device 100, and may manage uploading of photo content using the reference area 10, and the output state of the photo content. In addition, the service server 300 may use the location information of the user terminals 200 accessing the service server over the network, to determine whether the user terminals are within the reference area 10 and to receive photo content.

Herein, the network may be a wired network, such as a local area network (LAN), a wide area network (WAN), or a value-added network (VAN), or any types of wireless networks, such as a mobile radio communication network, a satellite network, Bluetooth, wireless broadband Internet (WiBro), High Speed Downlink Packet Access (HSDPA), long-term evolution (LTE), and 3/4/5/6th-generation mobile telecommunication (3/4/5/6G). A detailed configuration of the service server 300 will be described later with reference to FIG. 3.

In the meantime, the signage device 100 may display, through the display panel, a QR code storing a link to access the service server 300 for sharing photo content through the signage device 100. That is, the QR code and instructions for use may be displayed on the display panel so that a user who views the signage device 100 and wants to share his or her photo content can easily understand how to share, and the user can easily access the service server 300 by scanning the displayed QR code with the user terminal 200.

FIG. 3 is a diagram illustrating a detailed configuration of a service server 300, in a photo sharing system that uses a signage device 100 having a reference area 10 according to an embodiment of the present disclosure. As shown in FIG. 3, a service server 300 of a photo sharing system that uses a signage device 100 having a reference area 10 according to an embodiment of the present disclosure may include a database part 310, a location determination part 320, and a signage device management part 330, and may further include an editing part 340 and a reference area setting part 350.

The database part 310 may store the reference area 10 of the signage device 100. In addition, the database part 310 may store, for each signage device 100, photo content transmitted from the signage device management part 330, which will be described in more detail. That is, the database part 310 may store and manage the reference area 10 and the photo content for each signage device 100.

The location determination part 320 may use the location information of the user terminals 200 to determine whether the locations of the user terminals 200 are included in the reference area 10 of the signage device 100. To this end, the user terminals 200 may transmit the location information to the service server 300 through an embedded GPS module or a mobile communication network. According to an embodiment, a beacon device may be installed at the signage device 100 and the beacon device may be used to determine the locations of the user terminals 200.

The signage device management part 330 may control transmission so that the photo content received from the user terminals 200 is output to the signage device 100. Through this, the photo content of the users within the reference area 10 may be output to the signage device 100 for sharing.

That is, the signage device management part 330 may receive a result of determination by the location determination part 320, and may perform control to receive photo content from the user terminals 200 that are determined by the location determination part 320 to be within the reference area 10 and to output the photo content to the signage device 100. When the user terminals 200 determined by the location determination part 320 to be outside the reference area 10 attempt to transmit photo content, the signage device management part 330 may refuse to receive the photo content and may transmit messages to the user terminals 200, the messages saying that the users must be within the reference area 10 to share the photo content.

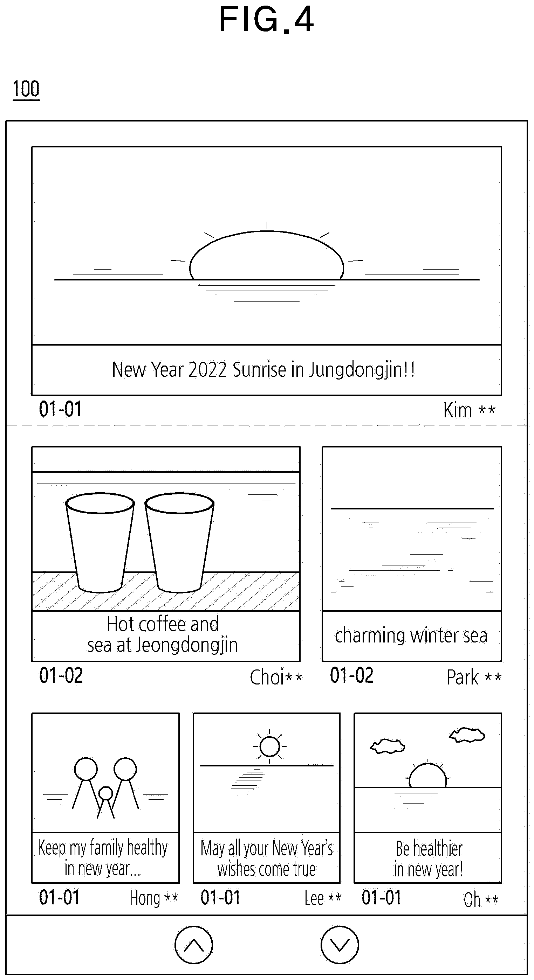

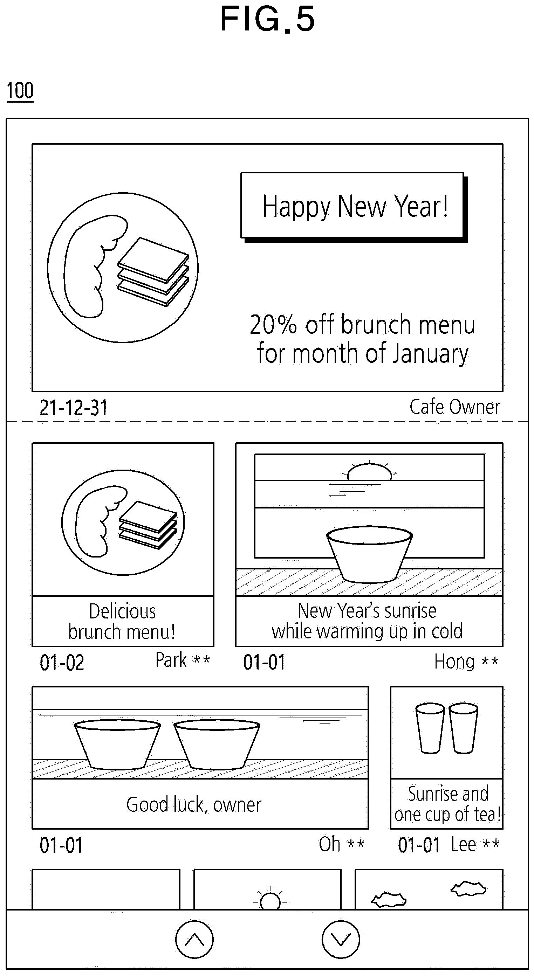

FIGS. 4 and 5 are diagrams illustrating examples of a display screen of a signage device 100 in which photo content is output, in a photo sharing system that uses a signage device 100 having a reference area 10 according to an embodiment of the present disclosure. As shown in FIGS. 4 and 5, a signage device 100 of a photo sharing system that uses a signage device 100 having a reference area 10 according to an embodiment of the present disclosure may output photo content transmitted by users within the reference area 10 under the control of the signage device management part 330.

For example, FIG. 4 shows a screen of a signage device 100 installed at Jeongdongjin, one of the tourist spots. People visiting Jeongdongjin to watch the sunrise on New Year's Day may share their own photos, New Year's wishes, and memories through the signage device 100. Because people take different photos and feel differently about the same scenery on the same day, photo and impression sharing between the users in the same space through the signage device 100 may give additional enjoyment to their trips and may make the users feel connected each other in the same space through photo content even if the users do not know each other.

In addition, FIG. 5 shows the screen of the signage device 100 installed at a cafe near Jeongdongjin. In this way, photos and messages are shared through a signage device 100 installed inside the store or in front of the store, store information, interior photos, or reviews of the products for sale may be shared and the store owner may inform customers of thank-you messages and discount event information through the signage device 100. In addition, as shown in FIG. 5, this may obtain the customer attracting effect that people intrigued by the photo content displayed on the signage device 100 come around the store.

As shown in FIGS. 4 and 5, multiple pieces of photo content may be simultaneously output to the display panel of the signage device 100. That is, in general, the screen of a signage device 100 is larger than that of a personal terminal, such as a mobile terminal or a tablet PC, so a plurality of pieces of photo content may be simultaneously displayed. In addition, there may be various layouts of the display screen of the signage device 100, and layouts, such as the size or placement of displayed photo content, may be flexibly configured to provide additional enjoyment.

According to an embodiment, when one piece of photo content includes a plurality of photos, the plurality of photos may be repeatedly displayed in sequence in one content frame. For example, the photo content displayed at the signage device 1200 of FIG. 4 may include several photos taken at Jeongdongjin, and the several photos may be repeatedly displayed, automatically rotating at regular time intervals.

In addition, if the signage device 100 is capable of user interaction, such as touch, when particular photo content is selected, the content may be displayed enlarged. That is, on the display screen of the signage device 100 as shown in FIG. 4, when the photo content "Keep my family healthy in the new year..." is selected, the relatively small photo is displayed enlarged on the display screen so that the details, such as a photo, a message, a creation date, and a creator, are more easily viewed.

In the meantime, the signage device 100 may output photo content in order of creation or in order of popularity. That is, the photo content most recently received from the user terminal 200 may be exposed at the top, and the photo content with the most feedback, such as views, selections, and likes, may be exposed at the top. In addition, content may be output in a form in which the order of creation and the order of popularity are combined. For example, the display screen of the signage device 100 may be operated by being divided into an area in which content is output in order of popularity and an area in which content is output in order of creation. In the example shown in FIG. 4, popular content with large sunrise shots may be output separately at the top, and under the popular content, photo content may be output in order of creation. In addition, in the example as shown in FIG. 5, photo content including brunch menu photos and discount event information uploaded by the cafe owner may be output separately on top as popular content, and pieces of photo content including customer reviews may be output in order of creation. Herein, at the top where popular content is output, a particular number of pieces of photo content may be changed and displayed in order of popularity.

The editing part 340 may provide an editing tool to the user terminals 200 for creating photo content. Regarding the editing tool provided by the editing part 340, the size and shape of a photo or the length of text that can be inserted may be specific to content for the signage device 100, for creating photo content for sharing through the signage device 100. Various filters, stickers, and images for editing photos may be provided. Various tools for selecting and applying the size, color, font, and position of text may be provided.

The reference area setting part 350 may set the reference area 10 of the signage device 100 by using location information of the user terminals 200 accessing the service server 300 and the installation location information of the signage device 100. More specifically, the reference area setting part 350 may set the reference area 10 for each signage device 100 by register the reference area 10 set by a manager of the signage device 100 in the database part 310 and storing the reference area. Herein, the reference area setting part 350 may use digital maps and GISs to set the reference area 10 in consideration of roads, buildings, and rivers near the location at which the signage device 100 is installed.

According to an embodiment, the reference area setting part 350 may analyze the location information of the user terminals 200 to analyze transient population and locations where many users stay, and may automatically set the reference area 10 based on the installation location of the signage device 100 on the basis of the analysis results. For example, the reference area 10 may be expanded further toward the area with a large transient population, or the reference area 10 may vary between day and night by utilizing the change in transient population during the day and night.

As described above, according to a photo sharing system that uses a signage device 100 having a reference area 10 proposed in the present disclosure, the reference area 10 of the signage device 100 is used to output photo content of users within the reference area 10 to the signage device 100, thereby sharing photo content with people near the signage device 100 to extend online social media functions to offline, enabling the people near the signage device 100 to have enjoyment while viewing the photo content together, and encouraging offline communication.

In the meantime, the present disclosure may include a computer-readable recording medium including program commands for performing operations implemented by various communication terminals. Examples of the computer-readable recording medium include magnetic recording media such as hard disks, floppy disks and magnetic tapes; optical data storage media such as CD-ROMs or DVD-ROMs; magneto-optical media such as floptical disks; and hardware devices, such as read-only memory (ROM), random-access memory (RAM), and flash memory, which are particularly structured to store and implement the program instruction.

The computer-readable recording medium may include program commands, data files, data structures, and the like separately or in combinations. Herein, the program commands being recorded in the computer-readable medium may correspond to a program command that is specifically designed and configured for the embodiments of the present disclosure, or the program command may correspond to a program command that is disclosed and available to anyone skilled in or related to computer software. For example, the program commands may include machine language codes, which are created by a compiler, as well as high-level language codes, which may be executed by a computer by using an interpreter.

Various modifications or applications of the above-described present disclosure may be made by those skilled in the art to which the present disclosure belongs, and the scope of the technical idea according to the present disclosure should be defined by the following claims.

## Claims

1. A photo sharing system that uses a signage device (100) having a reference area (10), the photo sharing system comprising:
the signage device (100) configured to output photo content through a display panel thereof;
user terminals (200) configured to transmit the photo content within the reference area (10) of the signage device (100); and
a service server (300) configured to remotely manage the signage device (100) so that the photo content received from the user terminals (200) is output from the signage device (100),
wherein the service server (300) comprises:
a database part (310) configured to store information setting the reference area (10) of the signage device (100);
a location determination part (320) configured to use location information of the user terminals (200) to determine whether locations of the user terminals (200) are included in the reference area (10) of the signage device (100); and
a signage device management part (330) configured to transmit the photo content received from the user terminals (200) so that the photo content is output from the signage device (100); and
the service server (300) further comprises
a reference area setting part (350) configured to set the reference area (10) of the signage device (100) by using the location information of the user terminals (200) accessing the service server (300) and installation location information of the signage device (100),
wherein the photo sharing system is configured to output the photo content of users within the reference area (10) from the signage device (100) for sharing.

2. The photo sharing system of claim 1, wherein the reference area (10)
includes an installation location of the signage device (100), or includes a region the front of the signage device faces.

3. The photo sharing system of claim 1, wherein the photo content
is composed of a photo and text of a predetermined length or less, or is composed of a video and text of a predetermined length or less.

4. The photo sharing system of claim 1, wherein the database part (310) is configured to
store, for each signage device (100), the photo content transmitted by the signage device management part (330).

5. The photo sharing system of claim 1, wherein the signage device (100) is configured to
output the photo content in order of creation or in order of popularity.

6. The photo sharing system of claim 1, wherein the signage device (100) is configured to
display, through the display panel, a QR code storing a link to access the service server (300) for sharing the photo content through the signage device (100).

7. The photo sharing system of claim 1, wherein the service server (300) further comprising
an editing part (340) configured to provide an editing tool to the user terminals (200) for creating the photo content.
